# EUROPÄISCHE PATENTSCHRIFT

(11) **EP 1 378 863 B1**
(45) Veröffentlichungstag und Bekanntmachung des Hinweises auf die Patenterteilung: **15.10.2008**
(21) Anmeldenummer: 03013900.0
(22) Anmeldetag: 20.06.2003
(51) Int. Cl.: G07C 5/08, A01B 79/00, A01D 41/127

(54) **Einrichtung zur Dokumentierung des Betriebs eines Zusatzgeräts für eine Arbeitsmaschine**
Device for registering the use of an implement on a working machine
Dispositif pour l'enregistrement de l'utilisation d'un outil sur une machine de travail

(30) Priorität: 06.07.2002 DE 10230474
(43) Veröffentlichungstag der Anmeldung: 07.01.2004
(73) Patentinhaber: DEERE & COMPANY, Moline, Illinois 61265-8098 (US)
(72) Erfinder: Kormann, Georg, Dr., 66424 Homburg (DE)
(74) Vertreter: Holst, Sönke

(56) Entgegenhaltungen:
- EP-A- 0 377 163
- EP-A- 1 169 902
- EP-A- 1 273 215
- DE-A- 4 340 285
- DE-A- 19 949 994
- US-A- 4 376 298

## Beschreibung

Die Erfindung betrifft eine Einrichtung zur Dokumentierung des Betriebs eines Zusatzgeräts für eine Arbeitsmaschine gemäß dem Oberbegriff des Anspruchs 1.

Arbeitsmaschinen, insbesondere Landmaschinen, unterliegen im Betrieb oft einem nicht unerheblichen Verschleiß. Im Fall eines Wiederverkaufs hängt der erzielbare Preis einer derartigen Maschine somit unter anderem von der Anzahl der abgeleisteten Betriebsstunden ab. Die Anzahl der abgeleisteten Betriebsstunden ist auch für die Einhaltung der Serviceintervalle und Garantiefragen von Bedeutung. Während bei selbstfahrenden Maschinen, wie Mähdreschern, Feldhäckslern und Traktoren in der Regel Betriebsstundenzähler vorhanden sind, anhand derer die Anzahl der geleisteten Betriebsstunden nachweisbar ist, fehlen derartige Einrichtungen bei Zusatzgeräten, z. B. Erntevorsätzen, Bodenbearbeitungsgeräten oder Geräten zum Ausbringen von Dünger, Pflanzenschutzmitteln oder Saatgut.

In der EP 0 377 163 A wird vorgeschlagen, einem Mikroprozessor einer Erntemaschine ein Signal zuzuführen, das eine Information über die Art der an der Erntemaschine angebrachten Aufnahmeeinrichtung enthält. Das Signal dient zur Festlegung der Vortriebsgeschwindigkeit. Außerdem ist der Mikroprozessor mit einem RAM-Speicher verbunden und erhält ein Geschwindigkeitssignal von einem Sensor, basierend auf dem er die Geschwindigkeit der Aufnahmeeinrichtung steuert.

Die DE 101 29 136 A schlägt vor, der Steuerung einer Erntemaschine eine Information über die Breite bzw. seitlichen Grenzen der Aufnahmeeinrichtung zuzuführen. Anhand der Information wird eine selbsttätige Erntegutkantenerkennungseinrichtung gesteuert.

In der DE 198 04 740 A und der DE 199 49 994 A wird eine Abspeicherung von Betriebsdaten von Zusatzgeräten eines Arbeitsgeräts beschrieben. Maschinenspezifische Daten der Maschine werden an das Trägerfahrzeug übergeben, welches selbsttätig die für die Adaption der speziellen Maschine an das Trägerfahrzeug notwendigen Verrichtungen durchführt.

Weiterhin beschreibt die nachveröffentlichte EP 1 273 215 A eine Kombination aus einem Zugfahrzeug und einem Bodenbearbeitungsgerät, bei der Betriebswerte des Bodenbearbeitungsgeräts durch Sensoren erfasst und zur geregelten Ansteuerung der Aktoren mit in einer Speichereinrichtung abgelegten Sollwerten verglichen werden.

Das der Erfindung zu Grunde liegende Problem wird somit darin gesehen, eine Einrichtung bereitzustellen, die es ermöglicht, den Betrieb und Zustand eines Anbaugeräts einer Arbeitsmaschine zu dokumentieren und später zu nutzen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Mittels einer Betriebsparametererfassungseinrichtung wird ein Betriebsparametersignal generiert, das eine Information über den Betrieb des Zusatzgeräts enthält. Das Betriebsparametersignal wird einer Speichereinrichtung zugeführt, die eine Betriebsdokumentationsinformation abspeichert, die aus dem Betriebsparametersignal abgeleitet wird oder letzterem entspricht. Anschließend wird das Zusatzgerät und/oder die Arbeitsmaschine entsprechend der Betriebsdokumentationsinformation angesteuert. Die Speichereinrichtung enthält einen nichtflüchtigen Speicher, damit die gespeicherten Informationen nach dem Abschalten des Zusatzgeräts bzw. der Arbeitsmaschine oder bei einem Batterieausfall nicht verloren gehen.

Auf diese Weise erreicht man, dass eine Information über den Betrieb des Zusatzgeräts abgespeichert wird. Die Information wird zur selbsttätigen Steuerung des Zusatzgeräts und/oder der Arbeitsmaschine herangezogen. Wenn beispielsweise ein bereits relativ viel benutzter Erntevorsatz (oder ein Erntevorsatz, bei dem ein Wartungsintervall nicht eingehalten wurde) verwendet wird, kann eine selbsttätige Steuerung die Vortriebsgeschwindigkeit und somit den Durchsatz innerhalb bestimmter Grenzen halten, um einen Ausfall des Erntevorsatzes zu vermeiden. Die Information über den Betrieb des Zusatzgeräts kann zusätzlich später zur Betriebsdatenerfassung (beispielsweise zur Abrechnung bei Lohnunternehmern), zu Servicezwecken oder bei einer Gebrauchtmaschinenüberprüfung abgerufen werden. Im Falle eines Wiederverkaufs ist bekannt, wie viele Stunden das Zusatzgerät im Einsatz war bzw. welchen Belastungen es ausgesetzt war.

Zum Ablesen oder anderweitigen Verarbeiten der Betriebsdokumentation aus der Speichereinrichtung findet eine Leseeinrichtung Verwendung. Sie kann räumlich mit der Speichereinrichtung verbunden sein. Es kann sich auch um ein separates, tragbares Gerät handeln, das ein Bediener oder autorisierter Servicemitarbeiter mit sich führen kann.

Denkbar ist auch, die Leseeinrichtung auf der Arbeitsmaschine anzuordnen. In dieser Ausführungsform ist es bevorzugt, die Leseeinrichtung in ein vorhandenes Bordcomputersystem der Arbeitsmaschine zu integrieren. Der Bediener kann durch eine entsprechende Abfrage die Betriebsdokumentationsinformation des Zusatzgeräts oder für ihn relevante Teile davon zur Anzeige bringen.

Außerdem kann in der Speichereinrichtung eine Information über das Zusatzgerät abgespeichert sein, die durch das Lesegerät anzeigbar oder auf das Bordcomputersystem der Arbeitsmaschine übertragbar ist. Die Information kann beispielsweise die Baureihe, Seriennummer und/oder den Hersteller des zusatzgeräts umfassen. Sie kann auch andere Eigenschaften des Zusatzgeräts identifizieren, wie dessen Arbeitsbreite oder geeignete Antriebsdrehzahlen. Das Bordcomputersystem kann Betriebsparameter der Arbeitsmaschine und/oder des Zusatzgeräts entsprechend der von der Speichereinrichtung übertragenen Informationen steuern.

Beispiele für die in der Speichereinrichtung ablegbare Betriebsparameter sind die Betriebsstunden, die bearbeitete Fläche, die mechanische Belastung am Antriebsstrang, die Betriebsgeschwindigkeit, der Durchsatz, die Arbeitsmaschine, Art des Ernteguts und Umgebungseigenschaften, wie Temperatur, Niederschlag oder eine Information über den Einsatzort, der mittels eines (beispielsweise satellitengestützten) Positionserfassungssystems erfasst werden kann, welches sich in der Regel auf der Arbeitsmaschine befindet. Die Information über den Einsatzort kann für Abrechnungszwecke bei Lohnunternehmern interessant sein.

Um Manipulationen zu verhindern, ist die Speichereinrichtung vorzugsweise derart mechanisch angeordnet, dass sie nicht ohne Zerstörung manipulierbar ist.

Die Betriebsparametererfassungseinrichtung und/oder die Speichereinrichtung enthalten in der Regel elektronische Bauelemente, die mit Strom zu versorgen sind. Dazu kann ein Speicher (Batterie oder Akkumulator) oder eine kabellose (z.B. induktive) oder kabelgebundene Energieübertragungseinrichtung dienen, um die genannten Einrichtungen von der Arbeitsmaschine her zu versorgen. Es wäre auch denkbar, den Speicher durch einen mechanisch von der Arbeitsmaschine her angetriebenen Generator und/oder eine Solarzelle abzupuffern.

Die Speichereinrichtung ist in der Regel mechanisch mit dem Zusatzgerät verbunden. Es wäre jedoch auch denkbar, sie räumlich davon getrennt anzuordnen und beispielsweise bei den Identifikationsunterlagen des Zusatzgeräts anzuordnen. Dazu können geeignete Transponder verwendet werden, die eine drahtlose Datenübertragung ermöglichen und hinreichend klein sind. Auch die Verwendung einer dem Zusatzgerät zugeordneten magnetischen oder elektronischen Chipkarte, die in entsprechendes Lesegerät der Arbeitsmaschine einführbar ist, wäre möglich. Um sicherzustellen, dass die Daten in der Speichereinrichtung stets aktuell sind und um zu vermeiden, dass das Zusatzgerät benutzt wird, ohne dass der Betrieb erfasst wird, wäre es denkbar, dass ein Bordcomputersystem der Arbeitsmaschine nur dann einen Betrieb des Zusatzgeräts ermöglicht, wenn eine Kommunikation mit der Speichereinrichtung möglich ist. Dazu bietet sich eine separate Erkennungsvorrichtung an, mit der das vorhandensein eines Zusatzgeräts mit zugeordneter Speichereinrichtung an der Arbeitsmaschine erkennbar ist, beispielsweise ein weiteres elektronisches Identifikationselement des Zusatzgeräts, das eine entsprechende Information elektronisch an den Bordcomputer der Arbeitsmaschine übermittelt. Weist diese Erkennungsvorrichtung ein Zusatzgerät mit externer Speichereinrichtung nach, ist nur bei vorhandener Kommunikation mit der Speichereinrichtung ein Betrieb des Zusatzgeräts möglich. Diese Anordnung hat auch Vorteile bezüglich des Diebstahlschutzes, da das Zusatzgerät an einer entsprechend ausgerüsteten Arbeitsmaschine ohne Speichereinrichtung nicht benutzbar ist.

Die Betriebsparametererfassungseinrichtung umfasst Sensoren, die sich auf dem Zusatzgerät oder auf der Arbeitsmaschine befinden können. In der Regel befindet sich ein Teil der Sensoren auf dem Zusatzgerät und ein Teil auf der Arbeitsmaschine, wobei jeweils bereits vorhandene Sensoren (z. B. für den Gutdurchsatz) mitgenutzt werden können. Die Sensoren am Zusatzgerät können durch Kabel mit der Speichereinrichtung verbunden werden, wenn sie sich am Zusatzgerät befindet. Die Sensoren auf der Arbeitsmaschine können ihre Daten ebenfalls drahtgebunden auf die Speichereinrichtung übertragen, wozu ein in der Regel ebenfalls bereits vorhandener Bus (CAN oder LBS) verwendet wird, an den das Zusatzgerät angeschlossen wird. Das Betriebsparametersignal kann auch drahtlos, z. B. über Funk oder optisch an die Speichereinheit übertragen werden.

Die Erfindung kann an beliebigen Zusatzgeräten für Arbeitsmaschinen genutzt werden. Beispiele sind Erntevorsätze für Erntemaschinen, Strohhäcksler für Mähdrescher, Bodenbearbeitungsgeräte, Sägeräte, Düngerstreuer für Traktoren oder Schaufeln für Bagger.

In der Zeichnung ist ein nachfolgend näher beschriebenes Ausführungsbeispiel der Erfindung dargestellt. Es zeigt:

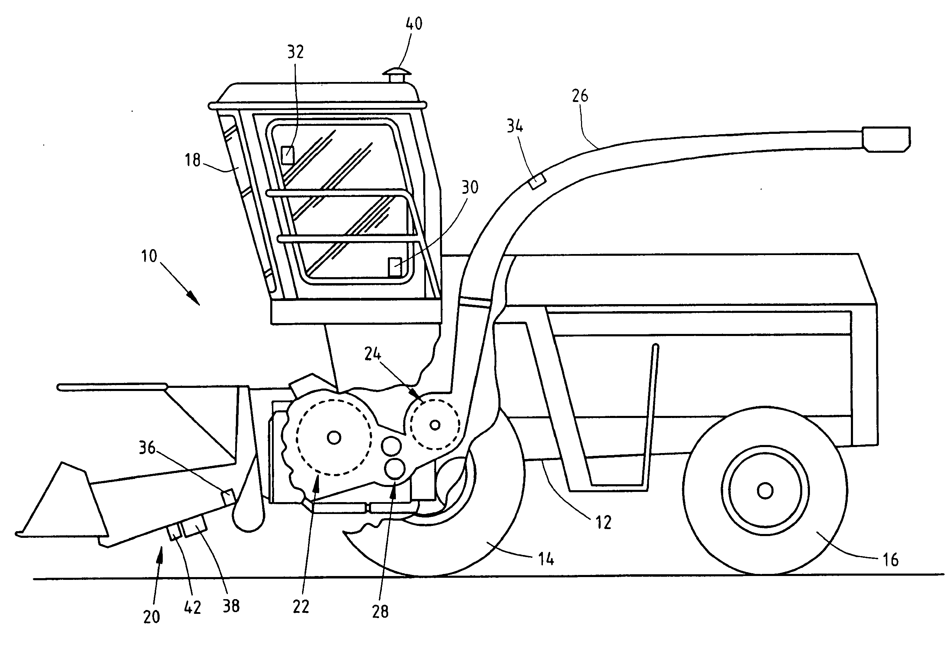

- Fig. 1: eine Erntemaschine mit einer erfindungsgemäßen Einrichtung zur Dokumentierung des Betriebs des Erntevorsatzes in Seitenansicht und in schematischer Darstellung.

Eine in Figur 1 gezeigte Arbeitsmaschine 10 in der Art eines selbstfahrenden Feldhäckslers baut sich auf einem Rahmen 12 auf, der von vorderen und rückwärtigen Rädern 14 und 16 getragen wird. Die Bedienung der Arbeitsmaschine 10 erfolgt von einer Fahrerkabine 18 aus, von der aus ein abnehmbares Zusatzgerät 20 in Form einer Erntegutaufnahmevorrichtung einsehbar ist. Mittels der Erntegutaufnahmevorrichtung vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über einen drehbaren Austragsschacht 26. Zwischen der Häckseltrommel 22 und der Fördervorrichtung 24 befindet sich eine Nachzerkleinerungsvorrichtung 28, durch die das zu fördernde Gut der Fördervorrichtung 24 tangential zugeführt wird.

Die Arbeitsmaschine 10 umfasst einen Bordcomputer 30, der über einen nicht dargestellten Bus unter anderem mit einem Bedienund Anzeigegerät 32, einem Durchflusssensor 34, einem Zusatzgerätbetriebssensor 36, einer Speichereinrichtung 38 und einem Positionssensor 40 verbunden ist. Diese Einrichtungen weisen jeweils einen Mikroprozessor bzw. -controller zur Datenübertragung über den Bus auf.

Der Durchflusssensor 34 umfasst einen Mikrowellensender und -empfänger, die im Austragschacht 26 angeordnet sind. Das Ausgangssignal des Durchflusssensors 34 hängt von der Menge des jeweils den Austragschacht durchlaufenden Ernteguts ab, da es die Intensität der vom Mikrowellenempfänger empfangenen Strahlung beeinflusst. Es kann auch ein beliebiger anderer Durchflusssensor genutzt werden, wie ein Sensor, der den Spalt zwischen zusammenwirkenden Vorpresswalzen erfasst.

Der Zusatzgerätbetriebssensor 36 ist ein elektromechanisch, induktiv oder elektrooptisch wirkender Sensor, der den Bewegungszustand von Einzugseinrichtungen (z. B. Querförderschnecke oder Einzugsketten) des Zusatzgeräts 20 erfasst. Er gibt ein Signal ab, das eine Information darüber enthält, ob das Zusatzgerät 20 sich im Betriebsmodus befindet oder nicht.

Der Positionssensor 40 umfasst eine Satellitenantenne, die mit einem Satellitensystem, z. B. dem GPS, zusammenwirkt und gibt eine georeferenzierte Information über die jeweilige Position der Arbeitsmaschine 10 ab.

Sobald sich der Bordcomputer 30 nach dem Anlassen des Hauptmotors der Arbeitsmaschine 10 im Betriebsmodus befindet, empfängt er vom Durchsatzsensor 34, vom Zusatzgerätbetriebssensor 36 und vom Positionssensor 40 Informationen über die Betriebsparameter des Zusatzgeräts, nämlich über den Durchsatz, den Betriebsmodus (Zusatzgerät ein oder aus) und die Position. Die genannten Einrichtungen einschließlich des Bordcomputers 30 dienen als Betriebsparametererfassungseinrichtung. Anhand dieser Betriebsparameterdaten erzeugt der Bordcomputer 30 ein Betriebsparametersignal, das er an die nichtflüchtige, durch eine Batterie 42 mit Strom versorgte Speichereinrichtung 38 übermittelt. Dort wird (beispielsweise im Sekundentakt) abgespeichert, ob sich das Zusatzgerät 20 im Betrieb befindet, welchen Durchsatz es verarbeitet und wo es sich befindet. Diese Betriebsdokumentationsinformation steht für spätere Verwendungen zur Verfügung. Es wäre auch denkbar, dass der Bordcomputer 30 zusätzlich oder alternativ nach dem Ende eines Erntevorgangs, welches anhand des Zusatzgerätbetriebssensors 36 erfassbar ist, nur eine kumulierte Betriebsdokumentation abspeichert, in der z. B. ein durchschnittlicher und vorzugsweise maximaler Durchsatz, die mittlere Position und die Betriebszeit enthalten ist.

Das Bedien- und Anzeigegerät 32 ermöglicht, verschiedene Betriebsparameter der Arbeitsmaschine 10 zur Anzeige zu bringen und manuell zu ändern. Es dient auch als Lesegerät für die Speichereinrichtung 38 und ermöglicht, die in der Speichereinrichtung 38 abgelegten Daten anzuzeigen. Der Bediener kann somit erkennen, wie viele Betriebsstunden das Zusatzgerät 20 abgeleistet hat. Außerdem enthält die Speichereinrichtung 38 eine Information über die Arbeitsbreite des Zusatzgeräts 20, die der Bordcomputer 30 bei der selbsttätigen Festlegung der Vortriebsgeschwindigkeit der Arbeitsmaschine 10 berücksichtigt.

Nachdem die Daten von der Speichereinrichtung 38 drahtlos oder mittels eines tragbaren Speichermediums z. B. auf einen Bürocomputer übertragen wurden, kann der Bediener anhand der Betriebsdokumentationsinformation eine Abrechnung durchführen, wobei die Positionsinformationen zur Identifikation des Kunden eines Lohnunternehmers hilfreich sein können. Sie dienen auch zur Feststellung der bearbeiteten Fläche. Außerdem wird die Betriebsdateninformation zur selbsttätigen Ansteuerung des Zusatzgeräts 20 genutzt.

## Patentansprüche

1. Einrichtung zur Dokumentierung und Steuerung des Betriebs eines Zusatzgeräts (20) für eine Arbeitsmaschine (10), mit einer Betriebsparametererfassungseinrichtung, die eingerichtet ist, einen Betriebsparameter des Zusatzgeräts (20) zu erfassen und ein Betriebsparametersignal abzugeben, und mit einer Speichereinrichtung (38), die eingerichtet ist, das Betriebsparametersignal zu empfangen und eine Betriebsdokumentationsinformation abzuspeichern, die aus dem Betriebsparametersignal abgeleitet wird oder dem Betriebsparametersignal entspricht, wobei die Einrichtung betreibbar ist, das Zusatzgerät (20) und/oder die Arbeitsmaschine (10) entsprechend der abgespeicherten Betriebsdokumentationsinformation anzusteuern, **dadurch gekennzeichnet, dass** die Speichereinrichtung (38) einen nichtflüchtigen Speicher enthält.

2. Einrichtung nach Anspruch 1, **gekennzeichnet durch** eine separate oder integrierte Leseeinrichtung, die eingerichtet ist, die Betriebsdokumentationsinformation aus der Speichereinrichtung (38) auszulesen.

3. Einrichtung nach Anspruch 2, **dadurch gekennzeichnet, dass** die Leseeinrichtung mit einem Bordcomputer (30) der Arbeitsmaschine zusammenwirkt.

4. Einrichtung nach einem der vorhergehenden Ansprüche, **dadurch gekennzeichnet, dass** in der Speichereinrichtung (38) eine Information über das Zusatzgerät (10) abgespeichert ist.

5. Einrichtung nach einem der vorhergehenden Ansprüche, **dadurch gekennzeichnet, dass** die Betriebsdokumentationsinformation eine Information über die Betriebszeit und/oder die bearbeitete Fläche und/oder eine Belastung und/oder Betriebsgeschwindigkeit und/oder den Durchsatz und/oder die Arbeitsmaschine (10) und/oder die Umgebungseigenschaften des Zusatzgeräts (20), z. B. den Einsatzort enthält.

6. Einrichtung nach einem der vorhergehenden Ansprüche, **dadurch gekennzeichnet, dass** die Stromversorgung der Betriebsparametererfassungseinrichtung und/oder der Speichereinrichtung (38) durch einen Stromspeicher (42) und/oder kabelgebunden oder kabellos von der Arbeitsmaschine (10) her erfolgt.

7. Einrichtung nach einem der vorhergehenden Ansprüche, **dadurch gekennzeichnet, dass** die Speichereinrichtung (38) am Zusatzgerät (20) angeordnet oder räumlich davon getrennt ist.

8. Einrichtung nach einem der vorhergehenden Ansprüche, **dadurch gekennzeichnet, dass** zumindest Teile der Betriebsparametererfassungseinrichtung auf der Arbeitsmaschine (10) angeordnet sind und dass eine drahtgebundene oder drahtlose Verbindung zur Übertragung des Betriebsparametersignals zur Speichereinrichtung (38) vorgesehen ist.

9. Zusatzgerät (20), insbesondere Erntevorsatz mit einer Einrichtung nach einem der vorhergehenden Ansprüche.

10. Arbeitsmaschine (10), insbesondere selbstfahrende landwirtschaftliche Maschine mit einem Zusatzgerät (20) und einer Einrichtung nach einem der Ansprüche 1 bis 8.

## Claims

1. Device for documenting and controlling the operation of an implement (20) for a machine (10), having an operating parameter sensing-device which is designed to sense an operating parameter of the implement (20) and to output an operating parameter signal, and having a memory device (38) which is designed to receive the operating parameter signal and to store operating documentation information which is derived from the operating parameter signal or corresponds to the operating parameter signal, wherein the device can be operated so as to actuate the implement (20) and/or the machine (10) in accordance with the stored operating documentation information, **characterized in that** the memory device (38) contains a non-volatile memory.

2. Device according to Claim 1, **characterized by** a separate or integrated reading device which is designed to read out the operating documentation information from the memory device (38).

3. Device according to Claim 2, **characterized in that** the reading device interacts with an on-board computer (30) of the machine.

4. Device according to one of the preceding claims, **characterized in that** information about the implement (10) is stored in the memory device (38).

5. Device according to one of the preceding claims, **characterized in that** the operating documentation information contains information about the operating time and/or the worked area and/or loading and/or operating speed and/or the throughput rate and/or the machine (10) and/or the properties of the surroundings of the implement (20), for example the place of use.

6. Device according to one of the preceding claims, **characterized in that** the power supply of the operating parameter-sensing device and/or of the memory device (38) is provided by means of a power accumulator (42) and/or from the machine (10) in a cable-bound or cableless fashion.

7. Device according to one of the preceding claims, **characterized in that** the memory device (38) is arranged at the implement (20) or is spatially separated from it.

8. Device according to one of the preceding claims, **characterized in that** at least parts of the operating parameter-sensing device are arranged on the machine (10), and **in that** a wire-bound or wireless connection is provided for transmitting the operating parameter signal to the memory device (38).

9. Implement (20), in particular harvesting attachment with a device according to one of the preceding claims.

10. Machine (10), in particular self-propelling agricultural machine having an implement (20) and a device according to one of Claims 1 to 8.

## Revendications

1. Dispositif pour documenter et commander le fonctionnement d'un appareil supplémentaire (20) pour une machine de travail (10), comprenant un dispositif d'acquisition des paramètres de fonctionnement qui est conçu pour acquérir un paramètre de fonctionnement de l'appareil supplémentaire (20) et pour délivrer un signal de paramètre de fonctionnement, et comprenant un dispositif de mémorisation (38) qui est conçu pour recevoir le signal de paramètre de fonctionnement et mémoriser une information de documentation de fonctionnement qui est dérivée du signal de paramètre de fonctionnement ou qui correspond au signal de paramètre de fonctionnement, le dispositif pouvant être utilisé pour commander l'appareil supplémentaire (20) et/ou la machine de travail (10) en fonction de l'information de documentation de fonctionnement mémorisée, **caractérisé en ce que** le dispositif de mémorisation (38) contient une mémoire non volatile.

2. Dispositif selon la revendication 1, **caractérisé par** un dispositif de lecture séparé ou intégré qui est conçu pour charger l'information de documentation de fonctionnement depuis le dispositif de mémorisation (38).

3. Dispositif selon la revendication 2, **caractérisé en ce que** le dispositif de lecture interagit avec un ordinateur de bord (30) de la machine de travail.

4. Dispositif selon l'une des revendications précédentes, **caractérisé en ce qu'**une information sur l'appareil supplémentaire (10) est enregistrée dans le dispositif de mémorisation (38).

5. Dispositif selon l'une des revendications précédentes, **caractérisé en ce que** l'information de documentation de fonctionnement contient une information sur le temps de fonctionnement et/ou la surface traitée et/ou une charge et/ou une vitesse de fonctionnement et/ou le débit et/ou la machine de travail (10) et/ou les propriétés environnementales de l'appareil supplémentaire (20), par exemple le lieu d'utilisation.

6. Dispositif selon l'une des revendications précédentes, **caractérisé en ce que** l'alimentation électrique du dispositif d'acquisition des paramètres de fonctionnement et/ou du dispositif de mémorisation (38) est réalisée par un accumulateur électrique (42) et/ou par câblage ou sans fil depuis la machine de travail (10).

7. Dispositif selon l'une des revendications précédentes, **caractérisé en ce que** le dispositif de mémorisation (38) est monté sur l'appareil supplémentaire (20) ou séparé de celui-ci dans l'espace.

8. Dispositif selon l'une des revendications précédentes, **caractérisé en ce qu'**au moins des parties du dispositif d'acquisition des paramètres de fonctionnement sont disposées sur la machine de travail (10) et qu'il est prévu une liaison filaire ou sans fil pour la transmission du signal de paramètre de fonctionnement vers le dispositif de mémorisation (38).

9. Appareil supplémentaire (20), notamment récolteuse rapportée munie d'un dispositif selon l'une des revendications précédentes.

10. Machine de travail (10), notamment machine agricole automotrice équipée d'un appareil supplémentaire (20) et d'un dispositif selon l'une des revendications 1 à 8.
